# EUROPEAN PATENT SPECIFICATION

(11) **EP 2 217 528 B1**
(45) Date of publication and mention of the grant of the patent: **17.07.2013**
(21) Application number: 08843556.5
(22) Date of filing: 21.10.2008
(51) Int. Cl.: B01J 8/02, C01B 3/38, B01J 8/06

(54) **HYDROGEN GENERATING APPARATUS USING STEAM REFORMING REACTION**
VORRICHTUNG ZUR ERZEUGUNG VON WASSERSTOFF UNTER VERWENDUNG DER WASSERDAMPFREFORMIERUNGSREAKTION
APPAREIL DE PRODUCTION D'HYDROGÈNE PAR RÉACTION DE REFORMAGE À LA VAPEUR

(30) Priority: 01.11.2007 KR 20070111066
(43) Date of publication of application: 18.08.2010
(73) Proprietor: SK Innovation Co., Ltd., Jongro-gu Seoul 110-110 (KR)
(72) Inventor: CHOI, Jae Suk, Yuseong-gu Daejeon 305-712 (KR); KIM, Myung Jun, Daejeon 305-712 (KR); KIM, Young Dae, Yuseong-gu Daejeon 305-712 (KR)
(74) Representative: Gerbino, Angelo
(86) International application number: PCT/KR2008/006212
(87) International publication number: WO 2009/057908

(56) References cited:
- EP-A1- 1 094 031
- JP-A- 2004 288 434
- KR-A- 20040 012 890
- KR-A- 20040 032 784
- KR-A- 20060 063 351
- KR-A- 20060 132 884

## Description

### REACTION

### [Technical Field]

The present invention relates to an apparatus for generating hydrogen by steam reforming which continually supplies hydrogen through the steam reforming reaction of natural gas or hydrocarbons, and more particularly to an apparatus for generating hydrogen by steam reforming, in which the structure of a support member for supporting catalytic tubes where a high-temperature reforming reaction occurs has improved and enhanced durability, thus ensuring the stable performance and reliability thereof.

### [Background Art]

Recently, as the consumption of energy has increased with the development of technological innovations, problems of limited fossil fuel reserves and environmental pollution have been being addressed, while interest in hydrogen energy which uses clean fuel hydrogen as an energy carrier has increased. However, in the production of hydrogen from alternative energy (solar energy, wind power, tidal power, etc.), there are still many difficulties and limits in terms of economic efficiency.

Accordingly, technologies for producing clean fuel hydrogen fossil fuels used in the prior art, that is, hydrocarbons including natural gas, have been suggested.

Current methods for producing hydrogen include steam reforming, partial oxidation or autothermal reforming of fossil fuels (coal, petroleum, natural gas, propane, butane, etc.) and the electrolysis of water, and among them, steam reforming can be considered as an economically viable method that is commercially used most widely.

A large-scale process of producing hydrogen by the abovo-mentioned steam reforming is advantageous for the production of hydrogen when a steam reformer is operated under conditions of high pressure (15-25 bar) and high temperature (higher than 850 °C). However, if the large-scale hydrogen production process is reduced to a medium or small scale for home use or distributed power generation, various limits including operating time, initial operation, stable steam supply, installation scale and size must be solved.

As efforts taken to solve these restrictions, there have been attempts to combine unit processes, develop catalysts suitable for small-scale fuel cell systems, optimize the analysis of heat flow, simplify the structure of the systems to increase processability and productivity, and reduce the size while integrating the elements of the systems to reduce the initial operating time and heat loss and to increase heat efficiency.

Steam reformer which are used in such prior medium- and small-scale processes mainly have a structure in which a large-sized heat exchanger is installed outside the refommer in order to assist in elevating the temperature of feed/water to a temperature (500-700 °C) suitable for the steam reformer by a high-temperature combustion exhaust gas after supplying heat required for a reforming reaction in the reformer by combustion gas.

On the contrary, if the heat exchanger is installed inside the reformer, it is expected that the structure of the system will be simplified, that the overall volume thereof will decrease and that the thermal efficiency thereof will increase. However, there are problems in that, because the complex heat-exchanger structure is provided inside the reformer, the initial deriving and stable operation of the reformer are difficult, and because the portion that is exposed to high temperature cornes in direct contract with the portion that is maintained at low temperature due to cooling by low-temperature water or feed, the reformer cannot sufficiently resist frequent thermal cycles.

EP-A-1 094 031 discloses a single-pipe cylinder type reformer producing hydrogen-rich reformed gas performing steam reforming.

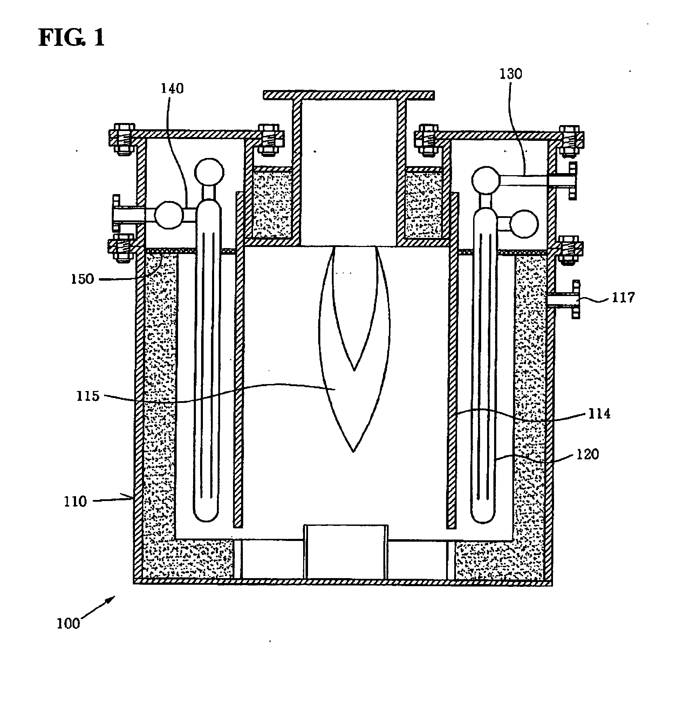

FIG. 1 is a schematic view showing the construction of a reformer according to the prior art. As shown in FIG. 1, in a reformer 100 according to the prior art, a combustion section 115 for producing heat required for a steam reaction is provided inside an outer casing 110. In this combustion section 115, a burner for burning air/fuel supplied from the outside is installed.

Herein, high-temperature heat produced in the combustion section supplies reaction heat to catalytic tubes 120, and then is discharged to the outside through a combustion gas exit 117.

Meanwhile, the prior reformer 100 has a structure in which a catalytic bed including the catalytic tubes 120 is arranged concentrically with respect to the combustion section 115. Herein, the catalytic bed is connected to a feed supply manifold 130 disposed within the casing 100, such that feed/steam are supplied to the catalytic bed.

Specifically, as shown in FIG. 1, the feed supply manifold 130 has a structure in which it is connected to an introduction tube for supplying feed/steam from the outside and connected to each of the catalytic tubes 120 so as to supply the supplied feed/steam to each of the catalytic tubes 120.

The feed/steam supplied to the catalytic tubes 120 undergoes a reforming reaction using reaction heat supplied from the combustion section 115, and is discharged through a reformate manifold 140 connected to one side of the catalytic tubes 120.

Herein, one end of the reformate manifold 140 is connected to the catalytic tube 120, and the other end thereof is connected to a discharge tube which is exposed to the outside of the casing 110.

Meanwhile, the catalytic tubes 120 are inserted into and supported by a support member 150 disposed horizontally in the tubular casing 110.

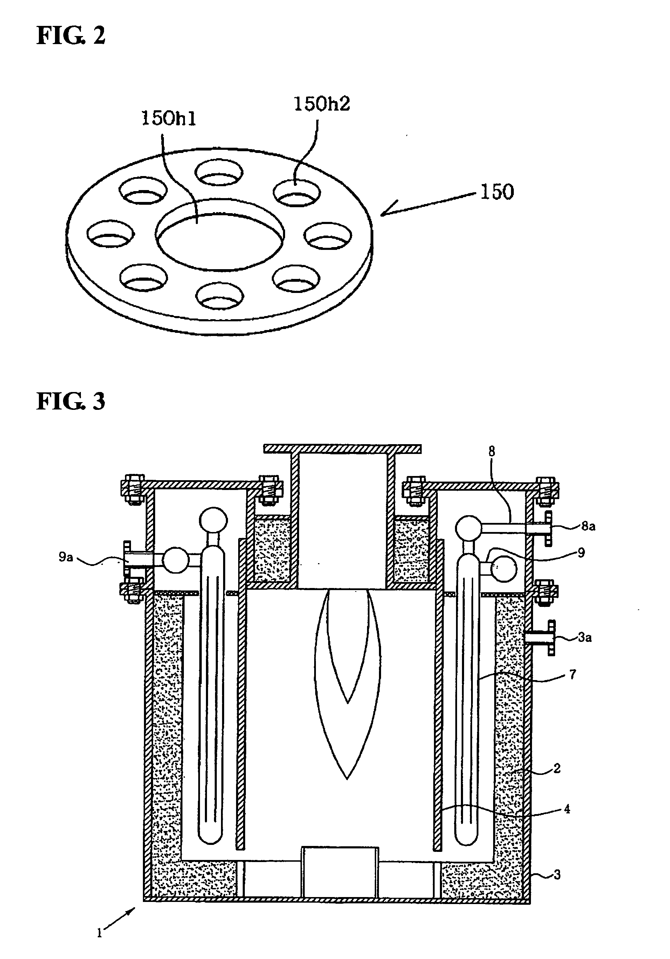

FIG. 2 is a perspective view of the prior support member 150. As shown therein, the support member 150 is provided in the form of a circular plate material having a given thickness, and an installation hole 150h1 having a given size is formed in the center thereof. Also, tube holes 150h2 into which one end of the catalytic tubes 120 is to be inserted are formed concentrically with respect to the installation hole 150h.

The outer circumferential side of the support member 150 having such a structure is mounted to the inner wall side of the casing 110 by welding, and the inner circumferential side is coupled to a tubular flame guide 114 disposed within the casing 110.

Specifically, the installation hole 150h1 of the support member 150 is installed at a distance from the inner circumferential side of the casing 110 and has a size corresponding to the outer circumferential side of the tubular flame guide 114 defining the combustion section 115 and the installation space of the catalytic tubes 120, such that it can be inserted around the outer circumferential side of the tubular flame guide 114. Herein, one end of the flame guide 114 is connected to the casing 110.

### [Disclosure]

### [Technical Problem]

However, the reformer according to the prior art has a problem in that, because the catalytic tubes are heated to high temperature by reaction heat, the support member supporting the catalytic tubes undergoes thermal deformation, such that the stability and durability thereof are greatly deteriorated.

Specifically, when the thermal deformation of the support member occurring at the high temperature at which the reformer operates is analyzed, the temperature of the central portion of the support member is considerably high. For this reason, at the central portion of the support member, thermal stress higher than an acceptable value occurs, and particularly, the risk of the deformation and breakdown of the support member is high, because the reformer operates at high temperature and low temperature repeatedly. For this reason, a serious problem arises in that the overall durability and stability of the reformer are deteriorated.

The present invention has been made in order to solve the above-described problems occurring in the prior, and it is an object of the present invention to provide an apparatus for generating hydrogen by steam reforming, in which a support member is divided into an inner ring plate and an outer ring plate, and tube holes are formed in a combination of the inner ring plate and the outer ring plate, such that catalytic tubes are inserted into the tube holes so as to have a gap between each catalytic tube and each tube hole, whereby the expansion and shrinkage of the support member by thermal stress can be stably compensated for.

### [Technical Solution]

To achieve the above object, the present invention provides an apparatus for generating hydrogen by steam reforming, comprising:
a casing having provided in the central portion thereof a combustion section for producing high-temperature reaction heat;
a flame guide provided such that it forms the outer wall of the combustion section while a space is provided outside thereof;
a plurality of catalytic tubes arranged concentrically with respect to the combustion section in the space outside the flame guide;
a feed supply manifold disposed at one side of the inside of the casing so as to distribute a feed supplied from the outside of the apparatus to each of the catalytic tubes;
a reformate manifold connected with one end of each of the catalytic tubes so as to discharge a reformate obtained by a reforming reaction to the outside of the apparatus; and
a support member which consists of an inner ring plate formed at one side of the inside of the casing and an outer ring plate disposed concentrically around the outer circumference of the inner ring plate, and which has formed at the boundary between the inner and outer ring plates tube holes into which one end of each of the catalytic tubes is inserted.

### [Advantageous Effects]

In the apparatus for generating hydrogen by steam reforming according to the present invention, the structure of the support member supporting the plurality of catalytic tubes is simply divided into the inner ring plate and the outer ring plate, such that the expansion and shrinkage of the support member by thermal stress can be efficiently compensated for. As a result, the deformation and breakdown of the support member by thermal stress can be prevented, thus improving the overall durability and stability of the hydrogen generating apparatus.

### [Description of Drawings]

FIG. 1 is a cross-sectional view showing the construction of an apparatus for generating hydrogen by steam reforming according to the prior art.
FIG. 2 is a perspective view showing a prior support member.
FIG. 3 is a cross-sectional view showing the construction of an apparatus for generating hydrogen by steam reforming according to the present invention.
FIG. 4 is a plane view showing an example of a support member according to the present invention.
FIG. 5 is a perspective view showing an example of a support member according to the present invention.

### * Description of important reference numerals used in the figures *

1: hydrogen generating apparatus; 3: casing;
3a: combustion gas exit; 5: combustion section;
7: catalytic tubes; 8: feed supply manifold;
8a: introduction tube; 9: reformate manifold;
9a: discharge tube; 10: support member;
10h1: installation hole; 10h2: tube holes;
11: inner ring plate; 11 a: inner half-groove;
13: outer ring plate; and 13a: outer half-groove.

### [Mode for Invention]

Hereinafter, preferred embodiments of an apparatus for generating hydrogen by steam reforming according to the present invention will be described in detail with reference to the accompanying drawings.

FIG. 3 is a cross-sectional view showing the construction of an apparatus for generating hydrogen by steam reforming according to the present invention.

As shown in FIG. 3, the inventive apparatus 1 for generating hydrogen by steam reforming broadly comprises an outer casing 3, a flame guide 4 defining a combustion section 5 provided in the casing 3, a plurality of catalytic tubes 7 vertically disposed in a space of the casing 3 divided from the combustion section, a feed supply manifold 8 for supplying a feed to each of the catalytic tubes 7, a reformate manifold 9 for discharging a reformate obtained in each of the catalytic tubes 7 to the outside, and a support member 10 for supporting each of the catalytic tubes 7.

The casing 3 is a body providing a space in which various elements including the combustion section 5 can be installed. The combustion section 5 is provided in the central portion of the inside of the casing 3.

Herein, the combustion section 5 serves to provide heat required for a reforming reaction and is provided with a known burner for burning air/fuel supplied from the outside. Heat generated in the combustion section 5 passes through the catalytic tubes 7 to be described later and is discharged to the outside through a combustion gas exit 3a.

The casing 3 can be provided in the form of a cylinder having an insulation material 2 provided to the inner wall side thereof, and the detailed description thereof will be omitted herein, because the construction of the casing 3 is known in the art.

The flame guide 4 is a tubular member installed in the case 3 and functions to form the outer side wall of the combustion section 5 and to define a space in which the catalytic tubes 7 are installed.

One end of this flame guide 4 is connected to the inner side wall of the casing 3, and the other end is spaced from the inner wall side of the casing 3, such that combustion gas produced in the combustion section 5 can flow to the space in which the catalytic tubes 7 are installed.

Specifically, as shown in FIG. 3, the upper end of the flame guide 4 is joined to the inner upper side of the case 3, and the lower end is spaced from the inner lower side of the casing 3.

Meanwhile, the flame guide 4 is made of a metal material which does not undergo high-temperature deformation or thermal expansion nor corrosion caused by surface oxidation, and the detailed description thereof will be omitted herein, because the flame guide 4 may be provided according to known technology as can be the casing 3.

The catalytic tubes 7 are installed in a space that is an outside with respect to the flame guide 4, and a plurality of the catalytic tubes 5 are arranged concentrically with respect to the combustion section 5.

Packed in such catalytic tubes 7 is either a Ni-based steam reforming catalyst or a Ni-based steam reforming catalyst containing at least 0.01 wt% of metals such as Pt or Ru.

Herein, the diameter of the reforming catalyst is suitably determined in consideration of pressure drop and reactivity in the catalytic tubes 7, and the construction of the reforming catalyst will be omitted herein, because it is known in the art.

The feed supply manifold 8 is installed in one side of the casing 3 so as to be connected to each of the catalytic tubes 7 and functions to distribute and supply feed/steam supplied from the outside.

The reformate manifold 9 is connected by piping to each of the catalytic tubes 7 and functions to discharge reformed gas, that is, a reformate, to the outside. As shown in FIG. 3, it is installed at one side of the feed supply manifold 8.

Meanwhile, the feed supply manifold 8 and the reformate manifold 9 may be disposed adjacent to each other and may also be disposed opposite to each other with respect to the catalytic tubes 7. The feed supply manifold 8 and the reformate manifold 9 may be provided in various forms, as long as they have the technical characteristics of supplying feed/steam to the catalytic tubes 7 and discharging the reformate to the outside, respectively.

Reference numeral 8a indicates a feed/steam supply tube which is exposed to the outside of the casing 3 and is connected to the feed supply manifold 8, and reference numeral 9a indicates a reformate discharge tube for discharging a reformate obtained in the catalytic tubes to the outside of the casing 3.

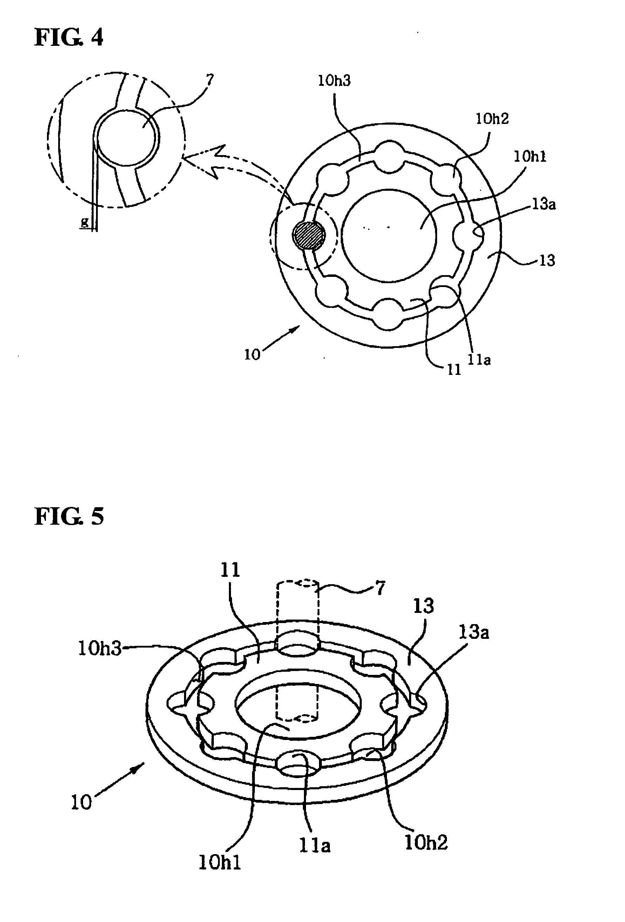

The support member 10 is an element constituting the main technical characteristic of the present invention, and is provided in the form of a disc made of a metal material and functions to provide stable support to the catalytic tubes 7. As shown in FIGS. 4 and 5, the support member 10 is divided into an inner ring plate 11 and an outer ring plate 13, such that the expansion and shrinkage caused by reaction heat can be compensated for.

At the boundary between the inner ring plate 11 and outer ring plate 13 of such a support member 10, tube holes 10h2 are formed into which one end of the catalytic tubes 7 is inserted.

More specifically, the inner ring plate 11 and the outer ring plate 13 which constitute the support member 10 are provided as circular plate materials having centrally perforated ring shapes, and therebetween is formed an expansion compensation gap 10h3, such that it can compensate for thermal expansion resulting from reaction heat

Specifically, the installation hole 10h1 is formed through the center of the inner ring plate 11, and the flame guide 4 is inserted into the installation hole 10h1, and then joined to the side of the hole 10h1 by welding.

In addition, in the center of the outer ring plate 13, a through hole (reference numeral not shown) capable of receiving the inner ring plate 11 is formed, and the outer circumferential side of the outer ring plate 13 is joined to the inner wall side of the casing 3 by welding.

In the inner ring plate 11 and outer ring plate 13 having such constructions, a plurality of tube holes 10h2 are formed, such that the catalytic tubes 7 can be inserted therein. Each of the tube holes 10h2 consists of a semicircular inner half-groove 11a formed at the outer circumferential side of the inner ring plate 11 and a semicircular outer half-groove 13a formed at the inner circumferential side of the outer ring plate 13, the outer half-groove being opposite the inner half-ring 11 a.

Meanwhile, the inner half-groove 11a and the outer half-groove 13a, which constitute each of the tube holes 10h2 have preferably a size larger than the diameter of each of the tube holes 7, such that they are located with a given gap "g" from the outer circumferential side of the catalytic tubes 7.

Thus, if the catalytic tubes 7 or the support member 10 expand by the reaction heat, the expansion is compensated for by the gap "g" so as to prevent stress concentration between the elements.

A combustion process in the above-described apparatus for generating hydrogen by steam reforming will now be described.

When the air and fuel supplied from the outside of the apparatus are burned by the burner in the combustion section 5, high-temperature exhaust gas is produced, and this exhaust gas moves to the catalytic tubes 7 in the space defined by the flame guide 4 and transfers heat to the catalytic tubes 7.

Then, the catalytic tubes 7 perform a reforming reaction using a reforming catalyst by receiving feed/steam through the feed supply manifold 8. In the reforming reaction, the feed/steam are converted into a preformed gas, that is, a reformate, which consists of hydrogen, carbon monoxide, carbon dioxide, unreacted feed and a remainder of water, and the converted reformate is discharged to the outside through the reformate manifold 9.

Meanwhile, the catalytic tubes 7 and the support member 10 expand under the high-temperature reaction heat, and the deformation of the elements by the thermal expansion is stably compensated for, because the support member 10 has a structure in which the inner ring plate 11 and the outer ring plate 13 are divided with respect to the catalytic tubes 7 while forming the expansion compensation gap 10h3 and the gap "g".

As described above, if the catalytic tubes 7 expand by reaction heat, the deformation by horizontal expansion of the catalytic tubes 7 can be eliminated through the gap between the catalytic tubes 7 and the tube holes 10h2 of the support member 10, and the vertical deformation of the catalytic tubes 7 can be eliminated through the connection between the feed supply manifold 8 and the reformate manifold 9 by a tube fitting. If the catalytic tubes 7, the feed supply manifold 8 and the reformate manifold 9 are connected to each other by the tube fitting, the catalytic tubes are easily attached and detached and, as a result, only catalytic tubes, the life of which was ended due to long-term exposure to high temperature, can be selectively replaced.

Although the preferred embodiments of the present invention have been disclosed for illustrative purposes, those skilled in the art will appreciate that various modifications, additions and substitutions are possible, as disclosed in the accompanying claims.

## Claims

1. An apparatus for generating hydrogen by steam reforming comprising:
a casing having provided in the central portion thereof a combustion section for producing high-temperature reaction heat;
a flame guide provided such that it forms the outer wall of the combustion section while a space is provided outside thereof,
a plurality of catalytic tubes arranged with regular intervals respecting to the center of combustion section in the space outside the flame guide;
a feed supply manifold disposed at one side of the inside of the casing so as to distribute a feed supplied from the outside of the apparatus to each of the catalytic tubes;
a reformate manifold connected with one end of each of the catalytic tubes so as to discharge a reformate obtained by a reforming reaction to the outside of the apparatus; and
a support member for supporting the catalytic tubes, which consists of an inner ring plate inside of the casing and an outer ring plate disposed concentrically around the outer circumference of the inner ring plate and which has formed at the boundary between the inner and outer ring plates tube holes into which one end of each of the catalytic tubes is inserted.

2. The apparatus of Claim 1, wherein each of the inner ring plate and the outer ring plate is made of a circular plate material having a centrally perforated ring shape.

3. The apparatus of Claim 1, wherein each of the tube holes consists of a semicircular inner half-groove formed at the outer circumferential side of the inner ring plate and a semicircular outer half-groove formed at the inner circumferential side of the outer ring plate and opposite the inner half-ring.

4. The apparatus of Claim 1, wherein the inner ring plate and the outer ring plate are provided in such a manner that an expansion compensation gap is formed, such that the gap can compensate for thermal expansion caused by the reaction heat of the combustion section.

5. The apparatus of Claim 1, wherein the inner ring plate is welded to the flame guide which is inserted into the central portion thereof, and the outer circumferential side of the outer ring plate is welded to the inner wall side of the casing.

6. The apparatus of Claim 1 or 3, wherein the inner half-groove and the outer half groove, which form each of the tube holes, are formed such that a gap exists between each half-groove and the outer circumferential side of each of the catalytic tubes.

## Patentansprüche

1. Vorrichtung zur Erzeugung von Wasserstoff durch Dampfreformierung, umfassend:
ein Gehäuse, ausgestattet mit einem Verbrennungsbereich für Hochtemperaturreaktionshitze im Mittelbereich davon;
eine Flammenführung, die so bereitgestellt ist, dass sie die äußere Wand des Verbrennungsbereichs bildet, während ein Raum außerhalb davon bereitgestellt ist;
mehrere Katalyseröhren, angeordnet in regelmäßigen Abständen bezüglich des Zentrums des Verbrennungsbereichs in dem Raum außerhalb der Flammenführung;
einen Einspeisungszuführungsverteiler, angeordnet an einer Seite der Innenseite des Gehäuses, um eine Einspeisung, die von außerhalb der Vorrichtung zugeführt wird, zu jeder der Katalyseröhren zu verteilen;
eine Reformatsammelleitung, die verbunden ist mit einem Ende von jedem der Katalyseröhren, um ein Reformat, das aus einer Reformierungsreaktion erhalten wird, an die Außenseite der Vorrichtung auszuleiten; und
ein Trägerelement zum Tragen der Katalyseröhren, bestehend aus einer inneren Ringplatte innerhalb des Gehäuses und einer äußeren Ringplatte, die konzentrisch um den äußeren Umfang der inneren Ringplatte angeordnet ist, und welche an der Grenze zwischen der inneren und der äußeren Ringplatte Röhrenlöcher hat, in welche ein Ende von jedem der Katalyseröhren eingeführt ist.

2. Vorrichtung nach Anspruch 1, worin die innere Ringplatte und die äußere Ringplatte aus einem Rundplattenmaterial mit einer zentral perforierten Ringform hergestellt sind.

3. Vorrichtung nach Anspruch 1, worin jedes der Röhrenlöcher aus einer halbkreisförmigen inneren Halbnut besteht, gebildet an der äußeren Umfangsseite der inneren Ringplatte und einer halbkreisförmigen äußeren Halbnut, gebildet an der inneren Umfangsseite der äußeren Ringplatte und gegenüber des inneren Halbrings.

4. Vorrichtung nach Anspruch 1, worin die innere Ringplatte und die äußere Ringplatte auf eine solche Art bereitgestellt werden, dass ein Expansionskompensationszwischenraum gebildet ist, so dass der Zwischenraum die thermische Expansion, die durch die Reaktionswärme des Verbrennungsbereichs hervorgerufen wird, kompensieren kann.

5. Vorrichtung nach Anspruch 1, worin die innere Ringplatte angeschweißt ist an die Flammenführung, die eingeführt ist in den zentralen Teil davon, und die äußere Umfangsseite der äußeren Ringplatte an die innere Wandseite des Gehäuses geschweißt ist.

6. Vorrichtung nach Anspruch 1 oder 3, worin die innere Halbnut und die äußere Halbnut, die jedes der Rohrlöcher bilden, so ausgebildet sind, dass ein Zwischenraum zwischen jeder Halbnut und der äußeren Umfangsseite von jeder der katalytischen Röhren vorliegt.

## Revendications

1. Appareil pour générer de l'hydrogène par reformage à la vapeur, comprenant :
un carter ayant, dans sa partie centrale, une section de combustion pour produire de la chaleur de réaction à haute température ;
un guide flamme prévu de sorte qu'il forme la paroi externe de la section de combustion alors qu'un espace est prévu à l'extérieur ;
une pluralité de tubes catalytiques agencés avec des intervalles réguliers par rapport au centre de la section de combustion dans l'espace à l'extérieur du guide flamme ;
un collecteur d'alimentation disposé d'un côté de l'intérieur du carter afin de distribuer une alimentation fournie depuis l'extérieur de l'appareil à chacun des tubes catalytiques ;
un collecteur de reformat raccordé à une extrémité de chacun des tubes catalytiques afin de décharger un reformat obtenu par une réaction de reformage à l'extérieur de l'appareil ; et
un élément de support pour supporter les tubes catalytiques, qui se compose d'une plaque annulaire interne à l'intérieur du carter et d'une plaque annulaire externe disposée de manière concentrique autour de la circonférence externe de la plaque annulaire interne et qui a, formés à la limite entre les plaques annulaires interne et externe, des trous de tube dans lesquels une extrémité de chacun des tubes catalytiques est insérée.

2. Appareil selon la revendication 1, dans lequel chacune parmi la plaque annulaire interne et la plaque annulaire externe, est réalisée avec un matériau de plaque circulaire ayant une forme annulaire perforée au centre.

3. Appareil selon la revendication 1, dans lequel chacun des trous de tube se compose d'une demi-rainure interne semi-circulaire formée au niveau du côté circonférentiel externe de la plaque annulaire interne et d'une demi-rainure externe semi-circulaire formée au niveau du côté circonférentiel interne de la plaque annulaire externe et opposée à la demi-bague interne.

4. Appareil selon la revendication 1, dans lequel la plaque annulaire interne et la plaque annulaire externe sont prévues de sorte qu'un espace de compensation d'expansion est formé, de sorte que l'espace peut compenser l'expansion thermique provoquée par la chaleur de réaction de la section de combustion.

5. Appareil selon la revendication 1, dans lequel la plaque annulaire interne est soudée au guide flamme qui est inséré dans sa partie centrale, et le côté circonférentiel externe de la plaque annulaire externe est soudé au côté de paroi interne du carter.

6. Appareil selon la revendication 1 ou 3, dans lequel la demi-rainure interne et la demi-rainure externe qui forment chacun des trous de tube, sont formées de sorte qu'il existe un espace entre chaque demi-rainure et le côté circonférentiel externe de chacun des tubes catalytiques.
